# EUROPEAN PATENT SPECIFICATION

(11) **EP 1 481 171 B1**
(45) Date of publication and mention of the grant of the patent: **24.05.2006**
(21) Application number: 03706733.7
(22) Date of filing: 27.02.2003
(51) Int. Cl.: F16B 5/00, E04F 10/04

(54) **IMPROVEMENTS IN AND RELATING TO CONNECTORS FOR CONNECTING CONSERVATORY STRUCTURAL ELEMENTS**
VERBESSURUNGEN FÜR VERBINDER ZUM VERBINDEN VON WINTERGARTENBAUELEMENTEN
AMELIORATIONS APPORTEES A DES RACCORDS POUR ELEMENTS PORTEURS DE SERRE

(30) Priority: 01.03.2002 GB 0204883
(43) Date of publication of application: 01.12.2004
(73) Proprietor: Burnden Holdings (UK) Limited, Bolton BL3 2RB (GB)
(72) Inventor: GORDON, Cliff, Bolton BL3 2RB (GB)
(74) Representative: Brandon, Paul Laurence
(86) International application number: PCT/GB2003/000805
(87) International publication number: WO 2003/074886

(56) References cited:
- WO-A-99/36637
- GB-A- 2 365 908
- US-A- 4 665 585

## Description

### Field of the Invention

The present invention relates to connectors for conservatory structural elements, especially, but not exclusively for connecting ringbeams to roof beams. The invention extends to a method of assembly of at least part of a conservatory structure

### Background to the Invention

At a ringbeam, the vertical wall of a conservatory is connected to a roof beam running to a ridge or crown. A connection needs to be provided between a first ringbeam and a second ringbeam, but the ringbeams may need to extend from one another at a variety of angles. Further a versatile connector is desirable for connecting other structural elements of a conservatory structure.

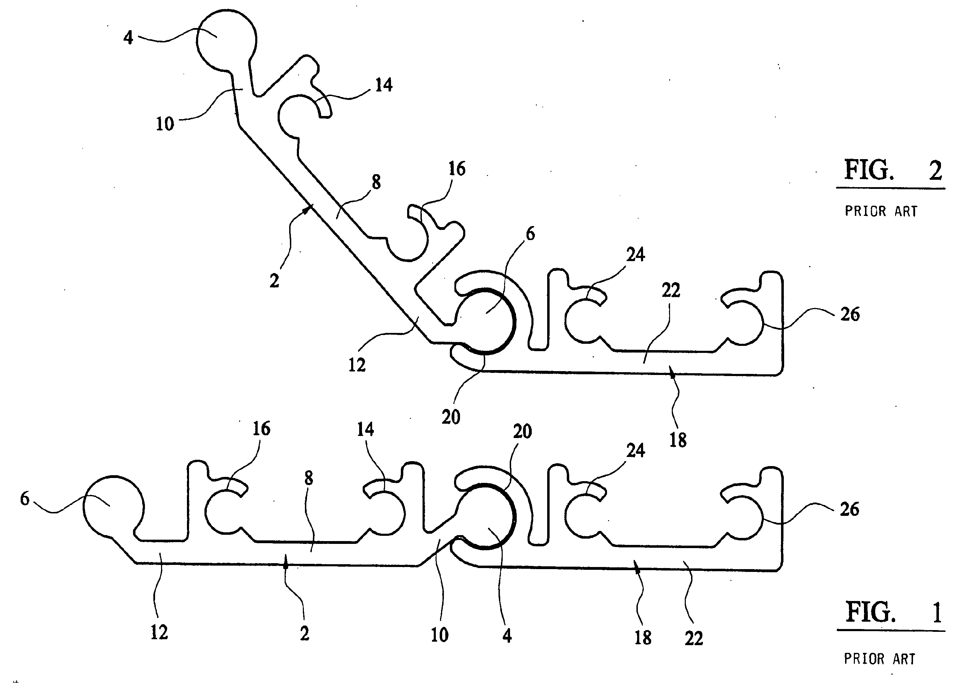

It is known for such a purpose to provide a connector of the type shown in Figures 1 and 2 of the drawings that follow. In Figures 1 and 2 there is shown a first connector part 2 comprising a first male connector 4 and a second male connector 6 at either end of a connector body 8. Each male connector 4, 6 is joined to the connector body 8 by an angled portion 10, 12 respectively. The connector body 8 incorporates screw ports 14, 16. A second connector part 18 comprises a female connector 20, from which extends a connector body 22 incorporating screw ports 24, 26.

Male connector parts 4, 6 slidingly fit in the female connector part 20 and are capable of rotating therein.

Angled portion 10 is configured relative to first male connector 4 whereby, as shown in Figure 1, the first connector part 2 can be rotated relative to the second connector 18 between the angles of 0° and 45°. Angled portion 12 is configured relative to second male connector 6 whereby, as shown in Figure 2, the first connector part 2 can be rotated relative to the second connector part 18 between the angles of 45° and 90°. Thus to achieve the different angle ranges, either the first male connector 4 or the second male connector 6 is inserted in female connector 20.

To secure the first and second connector parts 2, 18 relative to the structural elements of a conservatory, screws or bolts are driven through the relevant structural part to engage in the screw ports 14, 16, 24 and/or 26.

US-A-4 665 585 discloses a connector according to the precharacterising portion of claim 1.

It is an aim of preferred embodiments of the present invention to obviate or overcome a disadvantage of the prior art, whether referred to herein or otherwise.

### Summary of the Invention

According to the present invention in a first aspect, there is provided a connector for conservatory structural elements, the connector comprising a first connector part comprising a male connector joined to a female connector, and a second connector part comprising a male connector joined to a female connector, in which a male connector of a first connector part is rotatably engageable in a female connector of the second connector characterised in that the first connector part is substantially similar to the second connector part and in that inversion of one of the connector parts relative to the other provides a different range of angular relationships between the first and second connector parts.

Suitably, the first connector part is asymmetrically rotatable relative to the second connector part.

Thus by inversion of a connector part relative to the other, a first and second range of relative rotational movement can be achieved.

Preferably the male connector of the first connector part is substantially similar to the male connector of the second connector part. Preferably, the female connector of the first connector part is substantially similar to the female connector of the second connector part.

Preferably, the first connector part is substantially similar to the second connector part. Thus the same extrusion can be used for the first and second connector parts providing a significant cost saving and a reduced requirement for stocks.

Suitably, the male connector of a connector part is joined to the female connector of a connector part by a body portion. Suitably, at least one screw port is provided in the body portion.

Suitably, the male and/or female connector of a connector part is joined to the body portion by an angled section. The section is angled by not being a parallel extension of the body portion.

Suitably, a female connector comprises an offset open portion.

According to the present invention in a second aspect, there is provided a method of assembly of at least part of a conservatory structure, which method comprises the step of using a connector according to the first aspect of the present invention to connect at least two structural elements thereof.

### Brief Description of the Drawings

The present invention will now be described, by way of example only, with reference to the drawings that follow; in which:
Figure 1 is a cross-sectional elevation of a prior art connector in a first configuration.
Figure 2 is a cross-sectional elevation of the prior art connector of Figure 1 in a second configuration.
Figure 3 is a cross sectional elevation of a connector according to an embodiment of the present invention in a first configuration.
Figure 4 is a cross-sectional elevation of the first connector part shown in Figure 3.
Figure 5 is across-sectional elevation of the connector shown in Figure 3, in a second configuration.

### Description of the Preferred Embodiment

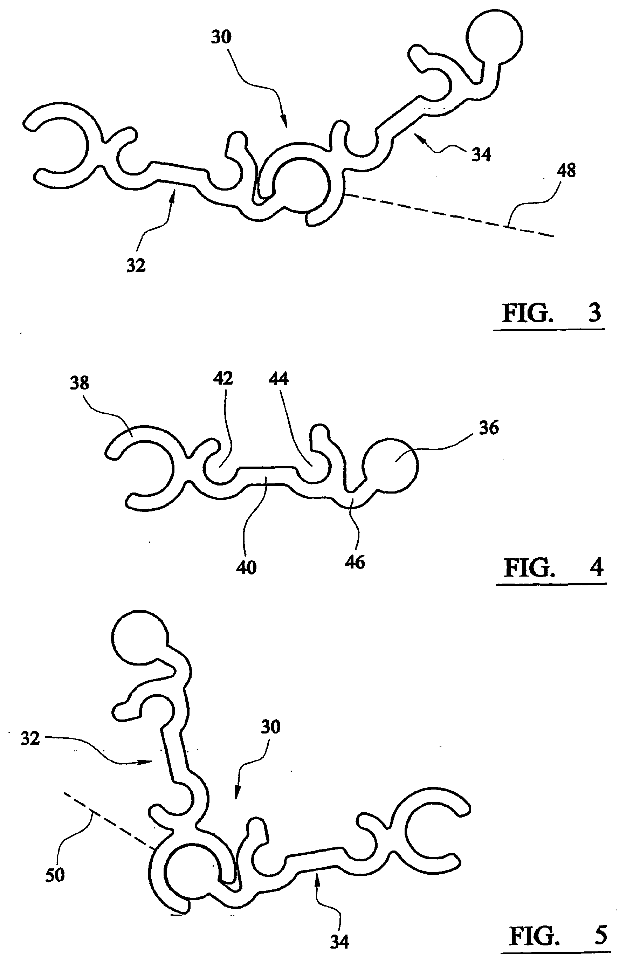

Referring to Figure 3 of the drawings that follow, there is shown a connector 30 comprising a first connector part 32 and a second connector part 34. The first and second connector parts 32, 34 are formed from aluminium extrusions.

Referring to Figure 4 of the drawings that follow, the first connector part 32 can be seen to comprise a male connector 36 of generally circular cross-section and a female connector 38 forming a C-shaped limb. A body portion 40 extends between male connector 36 and female connector 38. Body portion 40 carries two screw ports 42, 44. The C-shaped limb of female connector 38 is offset, i.e. non-symmetrical with respect to the plane of the body portion 40, and male connector 36 is attached to body portion 40 by an angled (with respect to the plane of body portion 40) section 46.

The second connector part 34 is substantially similar to first connector part 32 and generally will be formed from the same extrusion cut to length.

Referring to the connector configuration of Figure 3, first connector 32 is slidingly engaged with second connector 34. First connector 32 is capable of pivotal rotational movement relative to second connector 34 through the angles of 0° to 45°, the latter being shown (the 0° angle is shown by the dashed line 48 in Figure 3).

By inverting the first connector part 32, as shown in Figure 5 of the drawings that follow, an angle range of from 45° (shown by dashed line 50) to 90°, as shown in the Figure 5, can be achieved.

By having the C-shaped limb of the female connector 38 offset and the angle section 46 at an angle, the first and second connector parts 32, 34 are asymmetrically rotatable in that when one connector part is rotated relative to the other the moved part does not rotate to a symmetrical position relative to the stationary part.

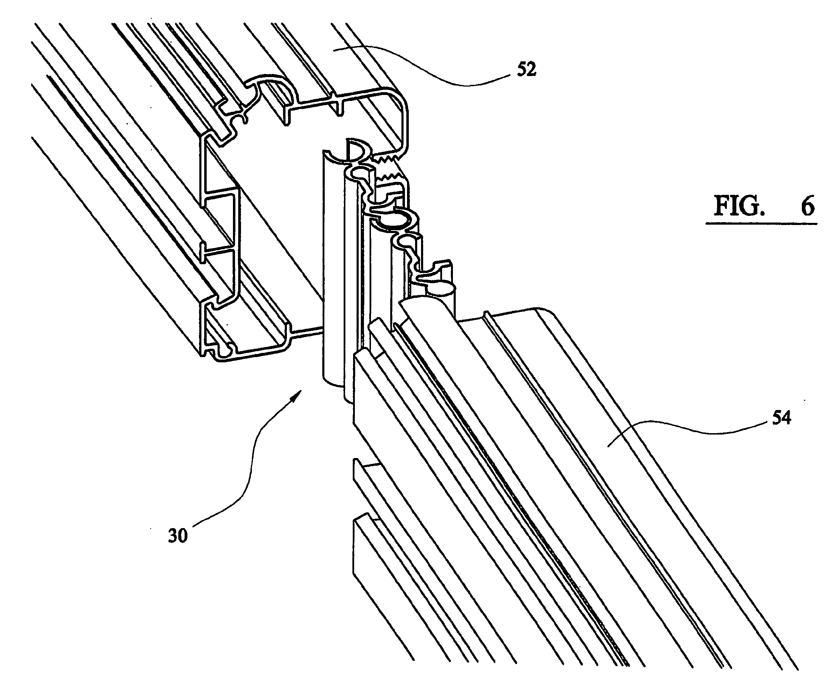

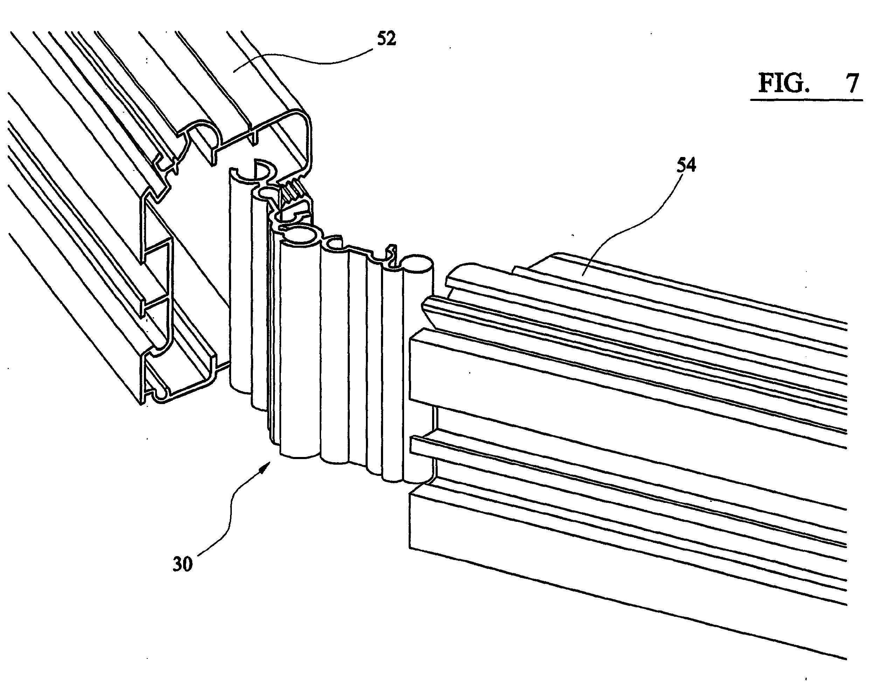

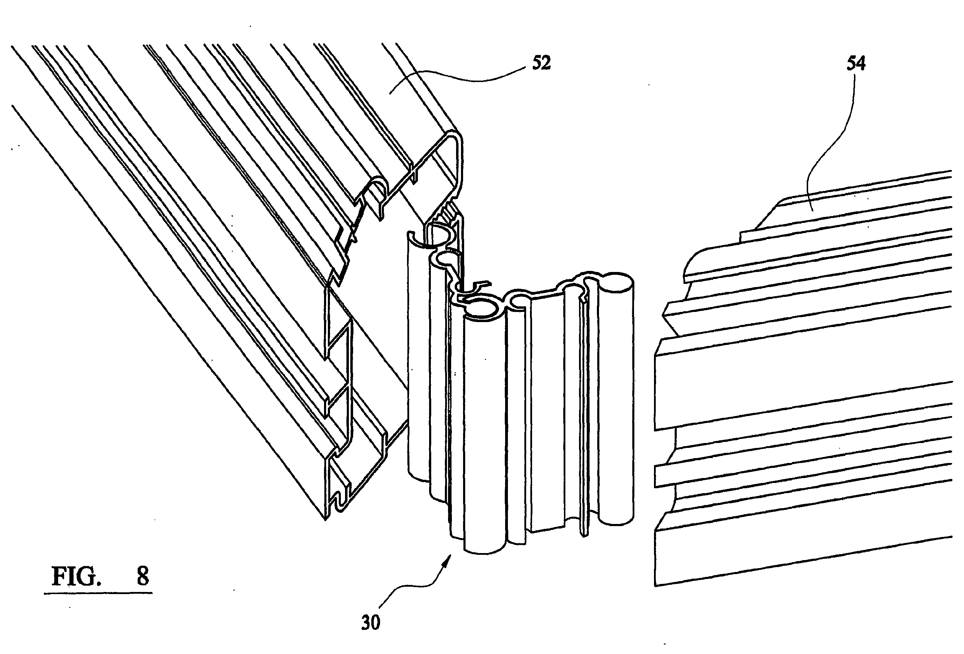

Referring to Figures 6-8 of the drawings that follow a connector 30 is shown in a range of configurations for connecting a first ringbeam 52 to a second ringbeam 54. Screws or bolts (not shown) are driven through the first and second ringbeams into respective screw ports of the connector to secure the connector in place relative to the beams. The connector 30 can be used to connect other structural elements of a conservatory, but it is particularly useful for the connection of a first ringbeam to a second ringbeam because of the angular flexibility it provides.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A connector (30) for conservatory structural elements, the connector comprising a first connector part (32) comprising a male connector (36) joined to a female connector (38), and a second connector part (34) comprising a male connector (36) joined to a female connector (38), in which a male connector (36) of a first connector part (32) is rotatably engageable in a female connector (38) of the second connector (34) **characterised in that** the first connector part (32) is substantially similar to the second connector part (34) and **in that** inversion of one of the connector parts (32, 34) relative to the other provides a different range of angular relationships between the first and second connector parts (32, 34).

2. A connector (30) for connecting conservatory structural elements according to claim 1, in which the first connector part (32) is asymmetrically rotatable relative to the second connector part (34).

3. A connector (30) for connecting conservatory structural elements according to any preceding claim, in which the male connector (36) of the first connector part (32) is substantially similar to the male connector (36) of the second connector part (32).

4. A connector (30) for connecting conservatory structural elements according to any preceding claim, in which the female connector (38) of the first connector part (32) is substantially similar to the female connector (38) of the second connector part (34) .

5. A connector (30) for connecting conservatory structural elements according to any preceding claim, in which the male connector (36) of a connector part (32, 34) is joined to the female connector (38) of a connector part (32, 34) by a body portion.

6. A connector (30) for connecting conservatory structural elements according to claim 5, in which at least one screw port is provided in the body portion (40).

7. A connector (30) for connecting conservatory structural elements according to claim 5 or claim 6, in which the male and/or female connector (36, 38) of a connector part (32, 34) is joined to the body portion (40) by an angled section (46).

8. A connector (30) for connecting conservatory structural elements according to any preceding claim, in which a female connector (38) comprises an offset open portion.

9. A method of assembly of at least part of a conservatory structure, which method comprises the step of using a connector (30) according to any preceding claim to connect at least two structural elements (52, 54) thereof.

10. A conservatory structure or part thereof comprising a first structural element (52), a second structural element (54) and a connector (30) connecting the first structural element (52) to the second structural element (54), in which the connector (30) is according to any one of claims 1-8.

## Patentansprüche

1. Verbinder (30) für Gewächshaus-Bauelemente, wobei der Verbinder einen ersten Verbinderteil (32), der einen Einsteckverbinder (36), der mit einem Aufnahmeverbinder (38) verbunden ist, und einen zweiten Verbinderteil (34) umfasst, der einen Einsteckverbinder (36) umfasst, der mit einem Aufnahmeverbinder (38) verbunden ist, wobei ein Einsteckverbinder (36) eines ersten Verbinderteils (32) drehbar mit einem Aufnahmeverbinder (38) des zweiten Verbinders (34) in Eingriff gebracht werden kann, **dadurch gekennzeichnet, dass** der erste Verbinderteil (32) im Wesentlichen dem zweiten Verbinderteil (34) gleicht und das Umdrehen eines der Verbinderteile (32, 34) relativ zu dem anderen einen anderen Bereich von Winkelbeziehungen zwischen dem ersten und dem zweiten Verbinderteil (32, 34) schafft.

2. Verbinder (30) zum Verbinden von Gewächshaus-Bauelementen nach Anspruch 1, wobei der erste Verbinderteil (32) relativ zu dem zweiten Verbinderteil (34) asymmetrisch gedreht werden kann.

3. Verbinder (30) zum Verbinden von Gewächshaus-Bauelementen nach einem der vorangehenden Ansprüche, wobei der Einsteckverbinder (36) des ersten Verbinderteils (32) im Wesentlichen dem Einsteckverbinder (36) des zweiten Verbinderteils (32) gleicht.

4. Verbinder (30) zum Verbinden von Gewächshaus-Bauelementen nach einem der vorangehenden Ansprüche, wobei der Aufnahmeverbinder (38) des ersten Verbinderteils (32) im Wesentlichen dem Aufnahmeverbinder (38) des zweiten Verbinderteils (34) gleicht.

5. Verbinder (30) zum Verbinden von Gewächshaus-Bauelementen nach einem der vorangehenden Ansprüche, wobei der Einsteckverbinder (36) eines Verbinderteils (32, 34) mit dem Aufnahmeverbinder (38) eines Verbinderteils (32, 34) durch einen Körperabschnitt verbunden ist.

6. Verbinder (30) zum Verbinden von Gewächshaus-Bauelementen Anspruch 5, wobei wenigstens eine Schraubenöffnung in dem Körperabschnitt (40) vorhanden ist.

7. Verbinder (30) zum Verbinden von Gewächshaus-Bauelementen nach Anspruch 5 oder Anspruch 6, wobei der Einsteck- und/oder der Aufnahmeverbinder (36, 38) eines Verbinderteils (32, 34) durch einen abgewinkelten Abschnitt (46) mit dem Körperabschnitt (40) verbunden ist.

8. Verbinder (30) zum Verbinden von Gewächshaus-Bauelementen nach einem der vorangehenden Ansprüche, wobei ein Aufnahmeverbinder (38) einen versetzten offenen Abschnitt umfasst.

9. Verfahren zum Zusammensetzen wenigstens eines Teils einer Gewächshausstruktur, wobei das Verfahren den Schritt des Benutzens eines Verbinders (30) nach einem der vorangehenden Ansprüche zum Verbinden von wenigstens zwei Bauelementen (53, 54) derselben umfasst.

10. Gewächshausstruktur oder Teil derselben, die ein erstes Bauelement (52), ein zweites Bauelement (54) und einen Verbinder (30) umfasst, der das erste Bauelement (52) mit dem zweiten Bauelement (54) verbindet, wobei der Verbinder (30) einem der Ansprüche 1-8 entspricht.

## Revendications

1. Raccord (30) pour raccorder des éléments de structure d'une serre, le raccord comprenant une première partie de raccord (32) comprenant un raccord mâle (36) rattaché à un raccord femelle (38), et une deuxième partie de raccord (34) comprenant un raccord mâle (36) rattaché à un raccord femelle (38), un raccord mâle (36) d'une première partie de raccord (32) pouvant s'emboîter de façon rotative dans un raccord femelle (38) de la deuxième partie de raccord (34), **caractérisé en ce que** la première partie de raccord (32) est essentiellement similaire à la deuxième partie de raccord (34), et **en ce que** l'inversion d'une des parties de raccord (32, 34) par rapport à l'autre crée une gamme différente de relations angulaires entre les première et deuxième parties de raccord (32, 34) .

2. Raccord (30) pour raccorder des éléments de structure d'une serre selon la revendication 1, la première partie de raccord (32) étant rotative de façon asymétrique par rapport à la deuxième partie de raccord (34).

3. Raccord (30) pour raccorder des éléments de structure d'une serre selon l'une quelconque des revendications précédentes, le raccord mâle (36) de la première partie de raccord (32) étant essentiellement similaire au raccord mâle (36) de la deuxième partie de raccord (32).

4. Raccord (30) pour raccorder des éléments de structure d'une serre selon l'une quelconque des revendications précédentes, le raccord femelle (38) de la première partie de raccord (32) étant essentiellement similaire au raccord femelle (38) de la deuxième partie de raccord (34).

5. Raccord (30) pour raccorder des éléments de structure d'une serre selon l'une quelconque des revendications précédentes, le raccord mâle (36) d'une partie de raccord (32, 34) étant rattaché au raccord femelle (38) d'une partie de raccord (32, 34) par un élément de corps.

6. Raccord (30) pour raccorder des éléments de structure d'une serre selon la revendication 5, au moins un orifice à vis étant ménagé dans l'élément de corps (40).

7. Raccord (30) pour raccorder des éléments de structure d'une serre selon la revendication 5 ou la revendication 6, le raccord mâle et/ou femelle (36, 38) d'une partie de raccord (32, 34) étant rattaché à l'élément de corps (40) par un tronçon incliné (46).

8. Raccord (30) pour raccorder des éléments de structure d'une serre selon l'une quelconque des revendications précédentes, un raccord femelle (38) comprenant un élément ouvert décalé.

9. Procédé d'assemblage d'une partie au moins d'une structure de serre, lequel procédé comprend l'étape consistant à utiliser un raccord (30) selon l'une quelconque des revendications précédentes pour raccorder au moins deux de ses éléments de structure (52, 54).

10. Structure de serre ou partie de celle-ci, comprenant un premier élément de structure (52), un deuxième élément de structure (54) et un raccord (30) raccordant le premier élément de structure (52) au deuxième élément de structure (54), le raccord (30) étant selon l'une quelconque des revendications 1 à 8.
